# EUROPÄISCHE PATENTANMELDUNG

(11) **EP 4 166 807 A1**
(43) Veröffentlichungstag der Anmeldung: **19.04.2023**
(21) Anmeldenummer: 20940733.7
(22) Anmeldetag: 20.08.2020
(51) Int. Cl.: F16D 25/08

(54) **HILFSZYLINDER ZUM LÖSEN EINER KUPPLUNG**

(30) Priorität: 15.06.2020 DE 102020115699
(71) Anmelder: Schaeffler Technologies AG & Co. KG, 91074 Herzogenaurach (DE)
(72) Erfinder: XU, Zhili, Shanghai 200435 (CN)
(86) Internationale Anmeldenummer: PCT/CN2020/110328
(87) Internationale Veröffentlichungsnummer: WO 2021/253617

(57) **Zusammenfassung**

Die Erfindung betrifft ein Kupplungsausrücknehmerzylinder, umfassend ein Gehäuse (10), einen Kolben (20) und ein Ausrücklager (30), wobei das Gehäuse (10) einen Innenraum (11) aufweist, wobei der Innenraum (11) ein offenes Ende und ein geschlossenes Ende, die axial gegenüberliegen, aufweist, wobei der Kolben (20) in dem Innenraum (11) montiert ist und entlang des Innenraums (11) zwischen einer zurückgezogenen Position nahe dem geschlossenen Ende und einer ausgefahrenen Position weg von dem geschlossenen Ende verschiebbar ist, wobei das Ausrücklager (30) einen axial am Kolben (20) anliegenden ersten Lagerring (31) und einen dem Kolben (20) abgewandten zweiten Lagerring (32) aufweist. Der Kupplungsausrücknehmerzylinder umfasst ferner ein elastisches Element, das an dem Gehäuse (10) montiert ist, wobei das elastische Element axial zwischen dem ersten Lagerring (31) und dem Gehäuse (10) oder axial zwischen dem Kolben (20) und dem Gehäuse (10) anliegt, wenn sich der Kolben (20) in der zurückgezogenen Position befindet. Der Kupplungsausrücknehmerzylinder der vorliegenden Erfindung kann zuverlässig eine Vorspannkraft bereitstellen.

## Beschreibung

Die vorliegende Erfindung betrifft das technische Gebiet der Fahrzeuge. Insbesondere betrifft die vorliegende Erfindung einen Kupplungsausrücknehmerzylinder für ein Kraftfahrzeug.

In einem hydraulischen Kupplungssystem eines Kraftfahrzeugs ist üblicherweise zwischen dem Kupplungspedal und der Kupplung ein Kupplungsausrücknehmerzylinder, wie etwa ein konzentrischer Ausrücknehmerzylinder (concentric slave cylinder, CSC), vorgesehen. Der Kupplungsausrücknehmerzylinder weist ein als Ringzylinder ausgebildetes Gehäuse auf, das um die Getriebeeingangswelle herum angeordnet ist. Im Gehäuse ist ein axial verschiebbarer Ringkolben angeordnet, auf dem das Ausrücklager der Kupplung gelagert ist. Wenn über die Hydraulikleitung eine hydraulische Last auf den Kolben aufgebracht wird, kann die vom Kolben erzeugte Vorspannung auf das Ausrücklager wirken, um die Kupplung zu betätigen.

Beispielsweise offenbart CN 210661115 U eine typische bidirektionale Kolbenkupplungsanordnung. Bei diesem Kupplungstyp umfasst der Ausrücknehmerzylinder zwei axial gegenüberliegende Hydraulikkammern, wobei jede Hydraulikkammer einen darin eingebauten Kolben umfasst.

In diesem Kupplungsausrücknehmerzylinder muss der hydraulische Druckpegel präzise gesteuert werden, um eine axiale Vorspannkraft für das Ausrücklager bereitzustellen, wenn sich der Kolben in der zurückgezogenen Position befindet. Heutige Hydraulikpumpsysteme erfüllen diese Anforderung an Präzision jedoch oft nicht, und wenn ein Steuerfehler auftritt, besteht die Möglichkeit, dass die Kupplung nicht richtig eingerückt oder ausgerückt ist.

Daher besteht die durch die vorliegende Erfindung zu lösende technische Aufgabe darin, einen Kupplungsausrücknehmerzylinder bereitzustellen, der zuverlässig eine Vorspannkraft bereitstellen kann.

Die obige technische Aufgabe wird durch einen Kupplungsausrücknehmerzylinder gemäß der vorliegenden Erfindung gelöst. Der Kupplungsausrücknehmerzylinder umfasst ein Gehäuse, einen Kolben und ein Ausrücklager. Das Gehäuse hat einen Innenraum mit einem offenen Ende und einem geschlossenen Ende, die axial gegenüberliegen. Ein Kolben ist in dem Innenraum montiert und entlang des Innenraums zwischen einer zurückgezogenen Position nahe dem geschlossenen Ende und einer ausgefahrenen Position weg von dem geschlossenen Ende verschiebbar. Das Ausrücklager weist einen axial am Kolben anliegenden ersten Lagerring und einen dem Kolben abgewandten zweiten Lagerring auf, wobei insbesondere der erste Lagerring mit einem dem geschlossenen Ende abgewandten Ende des Kolbens axial relativ fest verbindbar ist. Dabei umfasst der Kupplungsausrücknehmerzylinder noch ein elastisches Element, das an dem Gehäuse montiert ist, wobei das elastische Element axial zwischen dem ersten Lagerring und dem Gehäuse oder axial zwischen dem Kolben und dem Gehäuse anliegt, wenn sich der Kolben in der zurückgezogenen Position befindet, damit eine axiale Vorspannkraft für das Ausrücklager in der zurückgezogenen Position bereitgestellt werden kann. Die Vorspannkraft für das Ausrücklager wird durch das an dem Gehäuse montierte elastische Element bereitgestellt, was nicht nur den Aufbau und Einbau von Komponenten vereinfacht, sondern auch ermöglicht, dass eine besonders genaue Regelung der elastischen Kraft des elastischen Elements und eine genaue Begrenzung der Montagetoleranzen nicht erforderlich sind und außerdem ein Normalbetrieb der Kupplung nicht gestört und beeinflusst wird, da das elastische Element nur in der zurückgezogenen Position den Kolben oder das Ausrücklager berührt, so dass die Produktions- und Installationskosten stark reduziert werden können und die Zuverlässigkeit höher ist.

Gemäß einer bevorzugten Ausführungsform der vorliegenden Erfindung kann der Innenraum ringförmig sein, da der Kupplungsausrücknehmerzylinder im Allgemeinen ein ringförmiges Gehäuse aufweist. Der Kupplungsausrücknehmerzylinder kann ein ringförmiges elastisches Element oder mehrere elastische Elemente umfassen, die entlang der Umfangsrichtung beabstandet angeordnet sind.

Alternativ weist der Kupplungsausrücknehmerzylinder ein ringförmiges Gehäuse auf, und der Kupplungsausrücknehmerzylinder umfasst mehrere unabhängige, separate Kolben, wobei entsprechend an dem Gehäuse mehrere unabhängige, separate Innenräume, etwa in Form eines Windrads, zur Aufnahme der mehreren unabhängigen, separaten Kolben vorgesehen sind; wobei der Querschnitt des Kolbens bzw. des Innenraums jede gewünschte Form wie Kreis, Ellipse, Viereck oder dergleichen haben kann. Bei diesem Aufbau ist das elastische Element vorzugsweise ein unabhängiges und separates elastisches Element, und das elastische Element kann zwischen dem Gehäuse und dem ersten Lagerring oder zwischen dem Kolben und dem Gehäuse angeordnet sein.

Gemäß einer weiteren bevorzugten Ausführungsform der vorliegenden Erfindung kann für den Fall, dass das elastische Element zwischen dem ersten Lagerring des Ausrücklagers und dem Gehäuse anliegt, das Gehäuse einen ringförmigen gestuften Abschnitt umfassen, der an einer radial inneren Seite oder einer radial äußeren Seite des offenen Endes des Innenraums ausgebildet ist, wobei der gestufte Abschnitt eine sich radial erstreckende radiale Oberfläche und eine sich axial erstreckende axiale Oberfläche aufweist, und wobei das elastische Element auf dem gestuften Abschnitt montiert sein und axial an der radialen Oberfläche des gestuften Abschnitts anliegen kann. Wenn sich der Kolben in diesem Fall in der zurückgezogenen Position befindet, liegt das elastische Element axial zwischen der radialen Oberfläche des gestuften Abschnitts und dem ersten Lagerring des Ausrücklagers an. In diesem Fall kann das elastische Element ein Wellenring, eine Schraubenfeder bzw. eine Tellerfeder oder ein Gummiteil sein, wobei der Wellenring, die Schraubenfeder bzw. die Tellerfeder oder das Gummiteil den gestuften Abschnitt zumindest teilweise umgibt. Der Wellenring kann zum Beispiel eine industrieübliche Wellenfeder mit verschiedenen Spezifikationen oder andere wellenförmige elastische Elemente sein. Diese Komponente ist einfach im Aufbau und kostengünstig.

Gemäß einer weiteren bevorzugten Ausführungsform der vorliegenden Erfindung kann das elastische Element durch elastische Verformung die sich axial erstreckende axiale Oberfläche des gestuften Abschnitts radial drücken, so dass eine radiale Begrenzung des elastischen Elements durch die axiale Oberfläche des gestuften Abschnitts realisiert wird.

Gemäß einer weiteren bevorzugten Ausführungsform der vorliegenden Erfindung kann das Gehäuse ferner einen Begrenzungsabschnitt aufweisen, der radial von der axialen Oberfläche des gestuften Abschnitts vorsteht, wobei die radiale Oberfläche des gestuften Abschnitts und der Begrenzungsabschnitt jeweils von zwei axialen Seiten das elastische Element begrenzen.

Gemäß einer weiteren bevorzugten Ausführungsform der vorliegenden Erfindung kann sich der erste Lagerring auf einer radialen Seite zu dem gestuften Abschnitt hin erstrecken, damit er in der zurückgezogenen Position axial an dem elastischen Element anliegen kann, und der erste Lagerring ist auf der anderen radialen Seite mit dem Kolben verbunden, beispielsweise in eine Klemmnut am Kolben eingreifbar, so dass der erste Lagerring und der Kolben insbesondere axial relativ fest miteinander verbunden sind.

Gemäß einer alternativen Ausführungsform der vorliegenden Erfindung kann für den Fall, dass das elastische Element zwischen dem Kolben und dem Gehäuse anliegt, das elastische Element innerhalb des Innenraums montiert sein, wobei das elastische Element axial zwischen dem Kolben und dem geschlossenen Ende anliegt, wenn sich der Kolben in der zurückgezogenen Position befindet.

Unter den vorstehenden Umständen kann gemäß einer bevorzugten Ausführungsform der vorliegenden Erfindung das elastische Element eingeschränkt werden, indem es in Kontakt mit dem geschlossenen Ende ist. Vorzugsweise kann das Gehäuse ein Führungsteil, wie etwa Führungspfosten, aufweisen, das sich axial von dem geschlossenen Ende des Innenraums zu dem Kolben hin erstreckt, wobei das elastische Element durch das Führungsteil geführt werden kann, und das elastische Element beispielsweise in Form einer Schraubenfeder um die radial äußere Seite des entsprechenden Führungspfostens herumgewickelt werden kann. Der Führungspfosten kann beispielsweise zylindrisch sein und kann eine radiale und axiale Führung für die Schraubenfeder bereitstellen. Das elastische Element kann eine Schraubenfeder, ein Wellenring, eine Tellerfeder oder ein Gummiteil oder ein elastisches Teil in einer anderen Form sein.

Die vorliegende Erfindung wird nachstehend unter Bezugnahme auf die beigefügten Zeichnungen weiter beschrieben. Funktionsgleiche Elemente sind in den Figuren mit denselben Bezugzeichen dargestellt. Darin zeigt:
Fig. 1 eine schematische Darstellung eines Kraftfahrzeugs mit einem erfindungsgemäßen Kupplungsausrücknehmerzylinder;
Fig. 2 eine Schnittansicht eines Kupplungsausrücknehmerzylinders gemäß einer ersten Ausführungsform der vorliegenden Erfindung;
Fig. 3 eine Teilschnittansicht des Kupplungsausrücknehmerzylinders gemäß der ersten Ausführungsform der vorliegenden Erfindung;
Fig. 4 eine perspektivische Ansicht eines Wellenrings des Kupplungsausrücknehmerzylinders gemäß der ersten Ausführungsform der vorliegenden Erfindung;
Fig. 5 eine teilweise vergrößerte Ansicht des Kupplungsausrücknehmerzylinders gemäß der ersten Ausführungsform der vorliegenden Erfindung;
Fig. 6 eine perspektivische Schnittansicht eines Kupplungsausrücknehmerzylinders gemäß einer zweiten Ausführungsform der vorliegenden Erfindung;
Fig. 7 eine Explosionsansicht des Kupplungsausrücknehmerzylinders gemäß der zweiten Ausführungsform der vorliegenden Erfindung;
Fig. 8 eine Teilschnittansicht des Kupplungsausrücknehmerzylinders gemäß der zweiten Ausführungsform der vorliegenden Erfindung; und
Fig. 9 eine Teilschnittansicht eines Kupplungsausrücknehmerzylinders gemäß einer dritten Ausführungsform der vorliegenden Erfindung.

Spezifische Ausführungsformen des Kupplungsausrücknehmerzylinders gemäß der vorliegenden Erfindung werden nachstehend unter Bezugnahme auf die beigefügten Zeichnungen beschrieben. Die folgende detaillierte Beschreibung und die begleitenden Zeichnungen werden verwendet, um die Prinzipien der vorliegenden Erfindung beispielhaft zu veranschaulichen. Die vorliegende Erfindung ist nicht auf die beschriebenen bevorzugten Ausführungsformen beschränkt und der Schutzumfang der vorliegenden Erfindung wird durch die Ansprüche definiert.

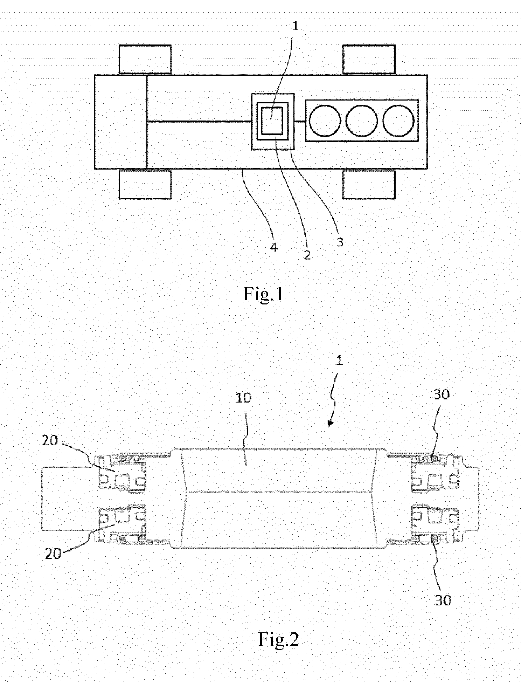

Gemäß einer Ausführungsform der vorliegenden Erfindung wird ein Kupplungsausrücknehmerzylinder für ein Kraftfahrzeug bereitgestellt, insbesondere ein konzentrischer Ausrücknehmerzylinder für ein hydraulisches Ausrücksystem eines Kupplungssystems eines Kraftfahrzeugs. Wie in Fig. 1 gezeigt, ist der Kupplungsausrücknehmerzylinder 1 Teil eines hydraulischen Ausrücksystems 2. Das hydraulische Ausrücksystem 2 wirkt auf den Kupplungsausrücknehmerzylinder 1, um eine hydraulische Betätigung einer Reibungskupplung (nicht gezeigt) eines Kupplungssystems 3 zu ermöglichen. Dieser Betätigungsvorgang kann durch einen von einer Steuereinheit gesteuerten Aktuator (nicht gezeigt) oder auch manuell durch den Fahrer über ein Kupplungspedal erfolgen. Der Kupplungsausrücknehmerzylinder 1 überträgt die erforderliche Ausrückkraft über ein Ausrücklager auf die Reibungskupplung bzw. deren Hebelsystem, beispielsweise eine Blattfeder oder einen Betätigungshebel. Die Spannungsweise des Hebelsystems und des Kupplungsgehäuses bestimmt, ob die Reibungskupplung eingerückt ist. Somit kann bei Beaufschlagung des auf das Hebelende des Hebelsystems wirkenden Ausrücklagers die Reibungskupplung durch den Schub des Kolbens eingerückt oder ausgerückt werden. Bei einer eingerückten Reibungskupplung kann eine mit der Reibungskupplung drehfest verbundene Getriebeeingangswelle ein Drehmoment von der Brennkraftmaschine über die Kupplungsscheibe auf das (nicht dargestellte) Getriebe und weiter auf die Antriebsräder des Fahrzeugs übertragen.

Eine Vielzahl unterschiedlicher Ausführungsformen des Kupplungsausrücknehmerzylinders gemäß der vorliegenden Erfindung wird unten im Detail unter Bezugnahme auf Fig. 2 bis Fig. 9 beschrieben. Die obige allgemeine Einführung gilt für die nachstehend beschriebenen verschiedenen Ausführungsformen.

Fig. 2 bis Fig. 5 zeigen eine erste Ausführungsform des Kupplungsausrücknehmerzylinders 1 gemäß der vorliegenden Erfindung. Wie in Fig. 2 gezeigt, enthält der Kupplungsausrücknehmerzylinder 1 gemäß der ersten Ausführungsform ein Gehäuse 10, einen Kolben 20, ein Ausrücklager 30 und ein elastisches Element.

Das Gehäuse 10 hat insgesamt eine ringförmige Struktur. Das Gehäuse 10 weist zwei axial gegenüberliegende ringförmige Innenräume 11 auf. Jeder Innenraum 11 erstreckt sich axial und hat jeweils ein offenes Ende und ein geschlossenes Ende, die axial gegenüberliegen. Die geschlossenen Enden der beiden Innenräume 11 sind einander zugewandt angeordnet und die offenen Enden sind einander abgewandt angeordnet. Die zwei Innenräume 11 haben grundsätzlich eine spiegelsymmetrische Struktur, daher wird nur einer von ihnen als Beispiel für die nachfolgende Beschreibung genommen. Es versteht sich jedoch, dass die folgende Beschreibung für einen beliebigen der Innenräume 11 und dessen zugehörige Komponenten auch auf den anderen der Innenräume 11 und dessen zugehörige Komponenten anwendbar ist. Außerdem ist zwar in verschiedenen Ausführungsformen der vorliegenden Erfindung der Kupplungsausrücknehmerzylinder 1 als ein bidirektionaler Kupplungsausrücknehmerzylinder mit zwei axial gegenüberliegenden Innenräumen 11 dargestellt, aber dies ist nicht beschränkend. Die verschiedenen Ausführungsformen der vorliegenden Erfindung sind auch auf einen unidirektionalen Kupplungsausrücknehmerzylinder, eine Vielzahl von Kupplungsausrücknehmerzylindern, die radial parallel angeordnet sind, oder andere geeignete Arten von Kupplungsausrücknehmerzylindern anwendbar.

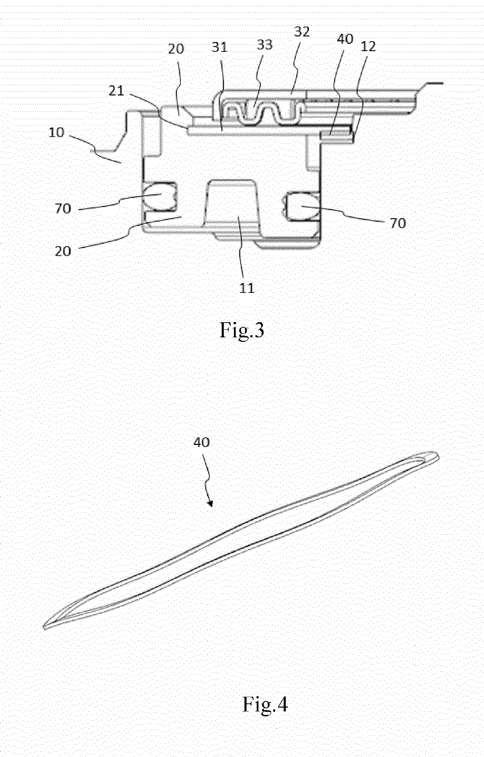

Fig. 3 zeigt eine vergrößerte Ansicht des Kupplungsausrücknehmerzylinders 1 in Fig. 2 an dem Innenraum 11. Wie in Fig. 3 gezeigt, ist der ringförmige Kolben 20 axial vom offenen Ende des Innenraums 11 in den Innenraum 11 eingeführt und ist entlang des Innenraums 11 zwischen einer zurückgezogenen Position nahe dem geschlossenen Ende und einer ausgefahrenen Position weg von dem geschlossenen Ende verschiebbar. An der radial inneren Seite und der radial äußeren Seite des Kolbens 20 ist jeweils eine ringförmige Dichtung 70 vorgesehen. Die Dichtung 70 kann beispielsweise ein elastischer Dichtring sein, der radial zwischen dem Kolben 20 und der Seitenwand des Innenraums 11 anliegt, um die zwischen dem Kolben 20 und dem Innenraum 11 gebildete Hydraulikkammer von außen abzudichten.

An einem dem geschlossenen Ende abgewandten Ende des Kolbens 20 ist koaxial ein Ausrücklager 30 angebracht. In einer Ausführungsform der vorliegenden Erfindung ist das Ausrücklager 30 schematisch als Axiallager dargestellt, das einen ersten Lagerring 31, einen zweiten Lagerring 32 und mehrere Rollen 33 umfasst. Der erste Lagerring 31 und der zweite Lagerring 32 sind koaxial angeordnet. Zwischen den beiden Lagerringen sind mehrere Rollen 33 drehbar angeordnet, so dass die beiden Lagerringe eine Relativdrehung ausführen können. Der erste Lagerring 31 liegt axial am Kolben 20 an, während der zweite Lagerring 32 dem Kolben 20 abgewandt ist. Es sei darauf hingewiesen, dass der eigene Aufbau des Lagers hier die vorliegende Erfindung nicht einschränkt. Der erste Lagerring 31 kann ein separates Bauteil sein oder durch die Stirnfläche des Kolbens 20 gebildet sein; das Ausrücklager 30 kann auch ein Lager anderer Art sein.

Wie in Fig. 3 gezeigt, kann an der radial äußeren Seite des Endes des Kolbens 20 ein vorstehender Abschnitt ausgebildet sein, in dem eine zur radial inneren Seite hin geöffnete Klemmnut 21 ausgebildet ist, wobei die radial äußere Seite des ersten Lagerrings 31 in die Klemmnut 21 eingelegt ist und dadurch axial und radial mit dem Kolben 20 relativ fest verbunden ist. Vorzugsweise kann die Klemmnut 21 mit dem ersten Lagerring 31 in Presspassung stehen, um die Umfangsfixierung des ersten Lagerrings 31 weiter zu realisieren. Dieses Einbauverfahren ist jedoch nur schematisch, und der erste Lagerring 31 kann auch durch andere Verfahren, wie etwa verschiedene kraftschlüssige oder formschlüssige Einbauverfahren, am Kolben 20 befestigt oder auch einstückig mit dem Kolben 20 ausgebildet sein.

Dementsprechend ist das Gehäuse 10 an der radial inneren Seite des offenen Endes des Innenraums 11 mit einem gestuften Abschnitt 12 ausgebildet. Der gestufte Abschnitt 12 umfasst eine sich axial erstreckende axiale Oberfläche und eine sich radial erstreckende radiale Oberfläche, wobei sich die axiale Oberfläche von einer radial inneren Kante der radialen Oberfläche in Richtung weg von dem geschlossenen Ende erstreckt. Der erste Lagerring 31 erstreckt sich zu der radial inneren Seite hin bis über die radiale Oberfläche des gestuften Abschnitts 12. Das elastische Element ist auf dem gestuften Abschnitt 12 montiert.

Wie in Fig. 4 gezeigt, kann in der ersten Ausführungsform das elastische Element ein Wellenring 40 sein. Ein Blech (das aus Metall oder anderen Materialien bestehen kann), das den Wellenring 40 bildet, ist abwechselnd zu beiden axialen Seiten hin gewellt, während es sich in Umfangsrichtung erstreckt, wodurch eine wellenartige Struktur gebildet ist. Der Wellenring 40 erstreckt sich um die Mittelachse des Gehäuses 10 herum und liegt axial an der radialen Obenfläche des gestuften Abschnitts 12 an. Wenn sich der Kolben 20 in die zurückgezogene Position bewegt, liegt der erste Lagerring 31 gleichzeitig aus einer dem gestuften Abschnitt 12 gegenüberliegenden Richtung axial an dem Wellenring 40 an. Daher liegt zu diesem Zeitpunkt der Wellenring 40 axial zwischen dem gestuften Abschnitt 12 und dem ersten Lagerring 31 an, um eine axiale Vorspannkraft für das Ausrücklager 30 bereitzustellen.

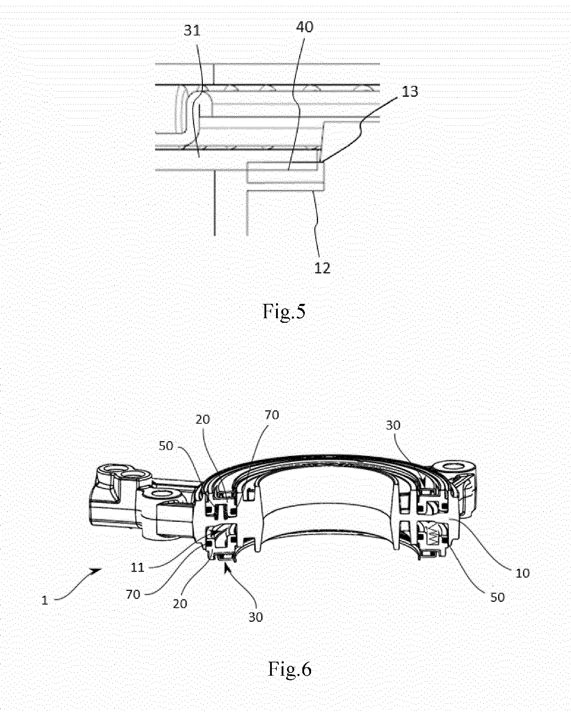

Um den Wellenring 40 besser zu installieren, kann der Wellenring 40 durch elastische Verformung radial die axiale Oberfläche des gestuften Abschnitts 12 drücken. Dabei stellt die axiale Oberfläche des gestuften Abschnitts 12 eine radiale Begrenzung für den Wellenring 40 bereit. Um den Wellenring 40 zu positionieren, wenn das Ausrücklager 30 nicht an dem Wellenring 40 anliegt, kann ein Begrenzungsabschnitt 13 auch auf der axialen Oberfläche des gestuften Abschnitts 12 ausgebildet sein. Wie in Fig. 5 gezeigt, erstreckt sich der Begrenzungsabschnitt 13 radial von der axialen Oberfläche des gestuften Abschnitts 12 bis über den Wellenring 40, um zusammen mit der radialen Oberfläche des gestuften Abschnitts 12 die axiale Position des Wellenrings 40 von beiden axialen Seiten zu begrenzen.

In der ersten Ausführungsform kann der Wellenring 40 auch durch andere ringförmige elastische Elemente wie etwa ringförmige Tellerfedern, Schraubenfedern, Gummiringe und dergleichen ersetzt werden. Außerdem kann das elastische Element auch eine Vielzahl separater kleinerer elastischer Elemente sein, die in Umfangsrichtung beabstandet angeordnet sind, wie z. B. eine Vielzahl von Schraubenfedern, Blattfedern, Blechfedern oder Gummiteilen usw., die in Umfangsrichtung beabstandet angeordnet sind. Gleichzeitig kann in der ersten Ausführungsform der gestufte Abschnitt 12 auch an der radial äußeren Seite des offenen Endes des Innenraums 11 ausgebildet sein. In diesem Fall kann der erste Lagerring 31 an der radial inneren Seite fest mit dem Kolben 20 verbunden sein und an der radial äußeren Seite an dem elastischen Element anliegen.

Fig. 6 bis Fig. 8 zeigen eine zweite Ausführungsform des Kupplungsausrücknehmerzylinders 1 gemäß der vorliegenden Erfindung. Wie in Fig. 6 gezeigt, enthält der Kupplungsausrücknehmerzylinder 1 gemäß der zweiten Ausführungsform auch ein Gehäuse 10, einen Kolben 20, ein Ausrücklager 30 und ein elastisches Element. Im Folgenden werden hauptsächlich die Unterschiede zwischen der zweiten Ausführungsform und der ersten Ausführungsform unter Bezugnahme auf Fig. 6 bis Fig. 8 beschrieben.

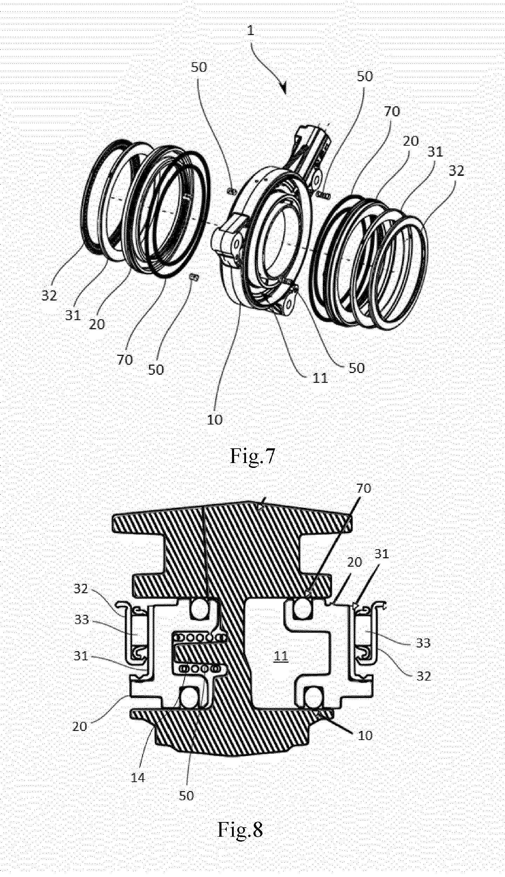

Wie in Fig. 7 gezeigt, weist der Kupplungsausrücknehmerzylinder 1 in der zweiten Ausführungsform eine Vielzahl von elastischen Elementen auf. Im Gegensatz zu dem Wellenring 40, der zwischen dem Gehäuse 10 und dem Ausrücklager 30 um den Innenraum 11 herum in der ersten Ausführungsform angeordnet ist, sind die elastischen Elemente in der zweiten Ausführungsform innerhalb des Innenraums 11 des Gehäuses 10 montiert und in Umfangsrichtung beabstandet verteilt. Ein axiales Ende jedes elastischen Elements liegt an dem geschlossenen Ende des Innenraums 11 an, und das andere axiale Ende liegt an dem Kolben 20 an, so dass der Kolben 20 elastisch belastet eine Vorspannkraft auf das Ausrücklager 30 aufbringt. Gemäß einer bevorzugten Ausführungsform kann der Kupplungsausrücknehmerzylinder 1 mindestens drei, vorzugsweise drei bis neun elastische Elemente umfassen. Diese elastischen Elemente können vorzugsweise in Umfangsrichtung gleichmäßig im Innenraum 11 angeordnet sein. In der zweiten Ausführungsform können diese elastischen Elemente vorzugsweise in Form von Schraubenfedern 50 ausgebildet sein. Diese Schraubenfedern 50 sind deutlicher in Fig. 7 und Fig. 8 zu sehen.

Fig. 8 zeigt eine Teilschnittansicht des Kupplungsausrücknehmerzylinders 1 gemäß der zweiten Ausführungsform. Wie in Fig. 8 gezeigt, ist ähnlich wie in der ersten Ausführungsform der Kupplungsausrücknehmerzylinder 1 der zweiten Ausführungsform auch schematisch als ein bidirektionaler Kupplungsausrücknehmerzylinder dargestellt und umfasst somit zwei axial gegenüberliegende Kolben 20, wobei die zwei Kolben 20 in einander gegenüberliegenden axialen Richtungen hydraulisch betätigbar sind. In Fig. 8 befindet sich der rechte Kolben 20 in einer ausgefahrenen Position und der linke andere Kolben 20 in einer zurückgezogenen Position.

Das elastische Element in Form einer Schraubenfeder 50 liegt mit einem axialen Ende an dem geschlossenen Ende des Innenraums 11 an, während das andere axiale Ende an einem dem geschlossenen Ende zugewandten Ende des Kolbens 20 anliegen kann, so dass insbesondere in der zurückgezogenen Position auf der linken Seite in Fig. 8 das elastische Element über den Kolben 20 eine axiale Vorspannkraft auf das Ausrücklager 30 ausüben kann.

Wie in Fig. 8 gezeigt, kann das Gehäuse 10 auch mehrere Führungspfosten 14 enthalten. Der Führungspfosten 14 kann eine zylindrische Struktur sein, die an dem geschlossenen Ende des Innenraums 11 befestigt ist und sich axial zu dem offenen Ende hin erstreckt. Jede Schraubenfeder 50 umgibt jeweils die radial äußere Seite des entsprechenden Führungspfostens 14, und wird damit durch den Führungspfosten 14 sowohl in der axialen Richtung als auch in der radialen Richtung geführt. Vorzugsweise kann der Führungspfosten 14 einstückig mit dem Gehäuse 10 ausgebildet sein. Weiterhin kann sich der Führungspfosten 14 in den Hohlraum des Bodens des Kolbens 20 erstrecken und seine axiale Erstreckung kann insbesondere so gestaltet sein, dass er die Bewegung des Kolbens 20 in die in Fig. 8 links gezeigte zurückgezogene Position nicht stört.

Der erste Lagerring 31 des Ausrücklagers 30 kann analog zur ersten Ausführungsform an einem dem geschlossenen Ende abgewandten Ende des Kolbens 20 montiert werden.

Die elastische Kraft des elastischen Elements wird lediglich benötigt, um die Vorspannkraft auf das Ausrücklager 30 in der zurückgezogenen Position, die im linken Teil von Fig. 8 gezeigt ist, aufzubringen. In dieser zurückgezogenen Position befindet sich der Kolben 20 in seiner vollständig zurückgezogenen Betriebsposition, aber aufgrund der elastischen Kraft des elastischen Elements stößt der Kolben 20 nicht axial gegen das geschlossene Ende des Innenraums 11. Sobald der Kupplungsausrücknehmerzylinder 1 unter Wirkung einer Hydraulikflüssigkeit betätigt wird, kann das Ausrücklager 30 eine Druckkraft direkt von dem Hydrauliksystem erhalten.

In der zweiten Ausführungsform kann die Schraubenfeder 50 auch durch eine Blechfeder oder andere ähnliche elastische Teile ersetzt werden.

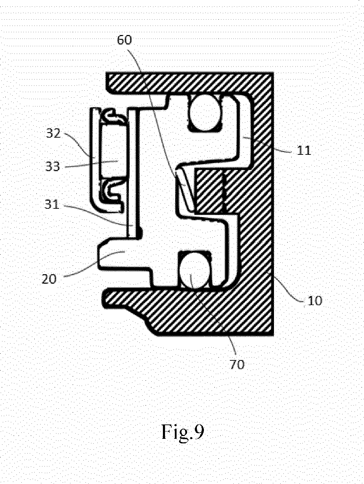

In der in Fig. 6 bis Fig. 8 gezeigten zweiten Ausführungsform verwendet der Kupplungsausrücknehmerzylinder 1 eine Vielzahl von Schraubenfedern 50, die in dem Innenraum 11 in Umfangsrichtung beabstandet angeordnet sind, um eine Vorspannkraft für das Ausrücklager 30 bereitzustellen. Anstelle mehrerer Schraubenfedern ist es jedoch auch möglich, ein einziges ringförmiges elastisches Teil zu verwenden, beispielsweise eine Schraubenfeder, eine Tellerfeder bzw. eine Blattfeder, ein Gummiteil, eine Wellenfeder, wobei das einzige ringförmige elastische Teil auf der axialen Mittellinie des Gehäuses 10 zentriert ist. Dies ist schematisch in einer in Fig. 9 gezeigten dritten Ausführungsform gezeigt. Wie in Fig. 9 gezeigt, ist eine ringförmige Tellerfeder 60 an dem geschlossenen Ende des Innenraums 11 montiert und umgibt den Innenraum 11 in Umfangsrichtung. Abgesehen davon ist die Implementierung der dritten Ausführungsform grundsätzlich die gleiche wie die der zweiten Ausführungsform.

Bei dem Kupplungsausrücknehmerzylinder gemäß der vorliegenden Erfindung wird, wenn sich der Kolben 20 in der zurückgezogenen Position befindet, eine Vorspannkraft durch das an dem Gehäuse 10 montierte elastische Element auf das Ausrücklager 30 aufgebracht. Es muss dabei lediglich sichergestellt werden, dass die von der Kupplung auf den zweiten Lagerring 32 aufgebrachte Axialkraft größer oder gleich der elastischen Kraft des elastischen Elements ist, und es ist nicht erforderlich, die Größe der von dem elastischen Element aufgebrachten Vorspannkraft genau zu steuern. Daher sind die Anforderungen an das elastische Element des Kupplungsausrücknehmerzylinders einfach und leicht umzusetzen. Dies kann die Produktionskosten reduzieren und die Steueranforderungen des Kupplungsausrücksystems mit hoher Zuverlässigkeit erfüllen.

Obwohl in der obigen Beschreibung mögliche Ausführungsformen beispielhaft beschrieben wurden, versteht es sich, dass es immer noch zahlreiche Variationen von Ausführungsformen durch alle bekannten und weitere für den Fachmann leicht denkbare Kombinationen von technischen Merkmalen und Implementierungen gibt. Darüber hinaus versteht es sich, dass die beispielhafte Ausführungsform lediglich ein Beispiel ist und dass eine solche Ausführungsform den Umfang, die Anwendbarkeit und die Konfiguration der vorliegenden Erfindung in keiner Weise einschränkt. Die vorstehende Beschreibung ist eher eine technische Anleitung für den Fachmann zum Umwandeln mindestens einer beispielhaften Ausführungsform, wobei verschiedene Änderungen vorgenommen werden können, insbesondere im Hinblick auf die Funktion und Struktur von den beschriebenen Komponenten, ohne den Schutzbereich der Ansprüche zu verlassen.

### Beschreibung der Bezugszeichen

- 1: Kupplungsausrücknehmerzylinder
- 2: hydraulisches Ausrücksystem
- 3: Kupplungssystem
- 4: Kraftfahrzeug
- 10: Gehäuse
- 11: Innenraum
- 12: gestufter Abschnitt
- 13: Begrenzungsabschnitt
- 14: Führungspfosten
- 20: Kolben
- 21: Klemmnut
- 30: Ausrücklager
- 31: erster Lagerring
- 32: zweiter Lagerring
- 33: Rolle
- 40: Wellenring
- 50: Schraubenfeder
- 60: Tellerfeder
- 70: Dichtung

## Patentansprüche

1. Kupplungsausrücknehmerzylinder, umfassend ein Gehäuse (10), einen Kolben (20) und ein Ausrücklager (30), wobei das Gehäuse (10) einen Innenraum (11) aufweist, wobei der Innenraum (11) ein offenes Ende und ein geschlossenes Ende, die axial gegenüberliegen, aufweist, wobei der Kolben (20) in dem Innenraum (11) montiert ist und entlang des Innenraums (11) zwischen einer zurückgezogenen Position nahe dem geschlossenen Ende und einer ausgefahrenen Position weg von dem geschlossenen Ende verschiebbar ist, wobei das Ausrücklager (30) einen axial am Kolben (20) anliegenden ersten Lagerring (31) und einen dem Kolben (20) abgewandten zweiten Lagerring (32) aufweist,
**dadurch gekennzeichnet, dass**
der Kupplungsausrücknehmerzylinder ferner ein elastisches Element umfasst, das an dem Gehäuse (10) montiert ist, wobei das elastische Element axial zwischen dem ersten Lagerring (31) und dem Gehäuse (10) oder axial zwischen dem Kolben (20) und dem Gehäuse (10) anliegt, wenn sich der Kolben (20) in der zurückgezogenen Position befindet.

2. Kupplungsausrücknehmerzylinder nach Anspruch 1,
**dadurch gekennzeichnet, dass**
der Innenraum (11) ringförmig ist und der Kupplungsausrücknehmerzylinder ein ringförmiges elastisches Element oder eine Vielzahl von ringförmigen elastischen Elementen umfasst, die in Umfangsrichtung beabstandet angeordnet sind; oder der Innenraum als eine Vielzahl von Hohlräumen, die in Umfangsrichtung beabstandet und unabhängig voneinander getrennt angeordnet sind, ausgebildet ist, und der Kupplungsausrücknehmerzylinder eine Vielzahl von elastischen Elementen, die in Umfangsrichtung beabstandet angeordnet sind, umfasst.

3. Kupplungsausrücknehmerzylinder nach dem vorhergehenden Anspruch 2,
**dadurch gekennzeichnet, dass**
der Querschnitt des Hohlraums kreisförmig, elliptisch oder vieleckig ist, wenn der Innenraum als eine Vielzahl von Hohlräumen, die in Umfangsrichtung beabstandet und unabhängig voneinander getrennt angeordnet sind, ausgebildet ist.

4. Kupplungsausrücknehmerzylinder nach einem der vorangehenden Ansprüche,
**dadurch gekennzeichnet, dass**
das Gehäuse (10) einen ringförmigen gestuften Abschnitt (12) aufweist, der am offenen Ende des Innenraums (11) ausgebildet ist, wobei der gestufte Abschnitt (12) eine sich radial erstreckende radiale Oberfläche aufweist, und das elastische Element auf dem gestuften Abschnitt (12) montiert ist und axial an der radialen Oberfläche des gestuften Abschnitts (12) anliegt.

5. Kupplungsausrücknehmerzylinder nach einem der vorangehenden Ansprüche,
**dadurch gekennzeichnet, dass**
das elastische Element eine Schraubenfeder, ein Wellenring (40), eine Tellerfeder oder ein Gummiteil ist, wobei die Schraubenfeder, der Wellenring, die Tellerfeder oder das Gummiteil den gestuften Abschnitt (12) zumindest teilweise umgibt.

6. Kupplungsausrücknehmerzylinder nach einem der vorhergehenden Ansprüche,
**dadurch gekennzeichnet, dass**
das elastische Element durch elastische Verformung radial eine sich axial erstreckende axiale Oberfläche des gestuften Abschnitts (12) drückt.

7. Kupplungsausrücknehmerzylinder nach einem der vorhergehenden Ansprüche,
**dadurch gekennzeichnet, dass**
das Gehäuse (10) ferner einen Begrenzungsabschnitt (13) aufweist, der radial von der axialen Oberfläche des gestuften Abschnitts (12) vorsteht, wobei die radiale Oberfläche des gestuften Abschnitts (12) und der Begrenzungsabschnitt (13) jeweils das elastische Element von beiden axialen Seiten begrenzen.

8. Kupplungsausrücknehmerzylinder nach einem der vorangehenden Ansprüche 1 bis 3,
**dadurch gekennzeichnet, dass**
das elastische Element innerhalb des Innenraums (11) eingebaut ist, wobei das elastische Element axial zwischen dem Kolben (20) und dem geschlossenen Ende anliegt, wenn sich der Kolben (20) in der zurückgezogenen Position befindet.

9. Kupplungsausrücknehmerzylinder nach dem vorhergehenden Anspruch 8,
**dadurch gekennzeichnet, dass**
das elastische Element in Kontakt mit dem geschlossenen Ende beschränkt ist.

10. Kupplungsausrücknehmerzylinder nach Anspruch 8 oder 9,
**dadurch gekennzeichnet, dass**
das Gehäuse (10) ein Führungsteil aufweist, das sich axial von dem geschlossenen Ende zu dem Kolben (20) hin erstreckt, wobei das elastische Element durch das Führungsteil geführt wird.

11. Kupplungsausrücknehmerzylinder nach einem der Ansprüche 8 bis 10,
**dadurch gekennzeichnet, dass**
das elastische Element eine Schraubenfeder (50), ein Wellenring, eine Tellerfeder oder ein Gummiteil ist.
